## Europäisches Patentamt
## European Patent Office
## Office européen des brevets

(11) Veröffentlichungsnummer: **0 242 579**
**B1**

(12) **EUROPÄISCHE PATENTSCHRIFT**

(45) Veröffentlichungstag der Patentschrift:
**27.12.90**

(21) Anmeldenummer: 87103679.4

(22) Anmeldetag: 13.03.87

(51) Int. Cl.⁵: **F23D 14/60,** F23D 14/62,
F02M 21/04

(54) **Vorrichtung zur Regelung der Menge und/oder des Mischungsverhältnisses eines Brenngas-Luft-Gemisches.**

(30) Priorität: **09.04.86 DE 3611909**

(43) Veröffentlichungstag der Anmeldung:
**28.10.87 Patentblatt 87/44**

(45) Bekanntmachung des Hinweises auf die Patenterteilung:
**27.12.90 Patentblatt 90/52**

(84) Benannte Vertragsstaaten:
**AT BE CH DE ES FR GB GR IT LI LU NL SE**

(56) Entgegenhaltungen:
**DE-A- 1 550 465
DE-A- 3 120 637
DE-B- 2 313 126
DE-C- 969 044**

(73) Patentinhaber: **Ruhrgas Aktiengesellschaft,
Huttropstrasse 60 Postfach 10 32 52,
D-4300 Essen 1(DE)**

(72) Erfinder: **Korsmeier, Wilhelm, Spiekeroogstrasse 5,
D-4350 Recklinghausen(DE)**
Erfinder: **Wolf, Dieter, Dipl.-Ing., Holunderweg 4,
D-4270 Dorsten 12(DE)**
Erfinder: **Vissel, Friedrich, Dr.rer.nat., Beisinger Weg 77,
D-4350 Recklinghausen(DE)**

(74) Vertreter: **Louis, Günter, Dipl.-Ing. et al, Patentanwälte
Dipl.-Ing. W. Louis, Dipl.-Ing. G. Louis Stubertal 3,
4300 Essen 1(DE)**

## Beschreibung

Die Erfindung bezieht sich auf eine Vorrichtung zur Regelung der Menge und/oder des Mischungsverhältnisses eines Brenngas-Luft-Gemisches, bestehend aus einem Gehäuse mit einem Lufteinlaß, einem Gaseinlaß, einem Gemischauslaß, einem im Gehäuse mittels eines Regelschiebers veränderbaren Gasregelquerschnitt und einem verstellbaren Luftregelquerschnitt.

Bei den gebräuchlichen und zum Beispiel aus der DE-OS 31 20 637 bekannten Vorrichtungen der vorgenannten Art ist in einem rohrartigen Gehäuse ein rohrförmig hohler Regelschieber verdrehbar und längsverschiebbar angeordnet. Durch Verdrehen des Regelschiebers wird der an der Gaseinlaßöffnung des Gehäuses liegende Gasregelquerschnitt verändert, der in den Hohlraum des Regelschiebers führt. Mit einem Abstand von der Gaseinlaßöffnung in Gehäuselängsrichtung ist an dem Gehäuse die Lufteinlaßöffnung angeordnet. Durch Verschieben des Regelschiebers in dem Gehäuse wird gleichzeitig der Gasregelquerschnitt und der an der Lufteinlaßöffnung liegende Luftregelquerschnitt verändert, der in einen zwischen dem Regelschieber und dem Gehäuse gebildeten Ringraum führt. An dem Ende des Regelschiebers, welches dem den Gemischauslaß darstellenden Gehäuseende zugewendet ist, sind der Regelschieberhohlraum und der Ringraum offen und strömen das Gas und die Luft erst zur Bildung des Gemisches zusammen. Die bekannte Vorrichtung ist geschaffen worden, um zwei Medien regelbar miteinander zu vermischen, die durch Überdruck der Vorrichtung zugeführt und als Gemisch weitergefördert werden. Bei der Anwendung der Vorrichtung für die Bildung und Regelung eines Brenngas-Luft-Gemisches zum Beispiel für einen selbstansaugenden Gasmotor, der durch Saugbeaufschlagung des Gemischauslasses der Vorrichtung die Luft und das Brenngas mit Unterdruck durch die Vorrichtung hindurchsaugt, kann sich einstellen, daß an dem Luftregelquerschnitt zwar im wesentlichen der Unterdruck der Saugbeaufschlagung herrscht, daß an dem Gasregelquerschnitt hingegen ein ungleicher Unterdruck ansteht, der durch konstruktiv bedingte gewisse Drosselungserscheinungen im Gasweg zwischen dem Gasregelquerschnitt und dem Gasaustrittsende des Regelschieberhohlraumes hervorgerufen ist und eine gleichbleibende Gemischbildung bei Unterdruckänderungen beeinträchtigt. Um den vom Gasregelquerschnitt durch den Regelschieberhohlraum geführten Gasstrom und den getrennt davon vom Luftregelquerschnitt durch den Ringraum geführten Luftstrom beim Zusammentreffen am Gasaustrittsende des Regelschiebers miteinander zu vermischen, ist eine den Gemischauslaß des Gehäuses bildende Mischereinrichtung aus Prallplatten oder dergleichen vorgesehen. Für die Durchmischung wird Energie verbraucht, und zusätzlich zu den in den Regelquerschnitten für Gas und Luft durch die Regelung entstehenden Drosselverlusten verursacht die Mischeinrichtung nochmals einen Druckabfall.

Die Erfindung hat zur Aufgabe, eine Regelvorrichtung der eingangs genannten Art zu schaffen, die bei Veränderung des Gasregelquerschnitts und des Luftregelquerschnitts den gleichen Unterdruck an beiden Regelquerschnitten bei Saugbeaufschlagung der Vorrichtung gewährleistet und die den Energieaufwand für die Durchmischung der beiden Gaskomponenten in einem gesonderten Mischer vermeidet.

Diese Aufgabe wird gemäß der Erfindung in erster Linie dadurch gelöst, daß der Luftregelquerschnitt und der Gasregelquerschnitt derart in dem Gehäuse angeordnet und ausgebildet sind, daß beide Regelquerschnitte mit ihren Austrittsseiten gemeinsam an den Rand eines in den Gehäuseinnenraum hineinragenden Gehäuseinnenrohres angrenzen und an diesem Rand diejenige Stelle des Gehäuseinnenraumes bilden, an der die Zusammenführung und Vermischung der mit den beiden Regelquerschnitten geregelten und aus ihnen austretenden Ströme von Luft und Gas stattfindet. Durch die Lage beider Regelquerschnitte ganz dicht beieinander praktisch am selben Ort im Inneren des Gehäuses wird erreicht, daß bei einer Saugbeaufschlagung der Vorrichtung zum Beispiel durch einen selbstansaugenden Gasmotor zwangsläufig und automatisch an beiden Regelquerschnitten der gleiche Unterdruck anliegt. Dies ermöglicht auch bei Unterdruckänderungen durch veränderte Saugbeaufschlagung eine genaue und gleichbleibende Regelung der Gemischbildung. Weiterhin wird durch die Lage beider Regelquerschnitte am selben Ort erreicht, daß die Regelstelle gleichzeitig die Mischstelle ist und daß der beim Regeln in den beiden Regelquerschnitten entstehende Druckabfall (Drosselverlust) sogleich in Mischenergie umgesetzt wird und zur intensiven Durchmischung von Gas und Luft genutzt wird. Hierdurch wird ein gesonderter Mischer mit nochmaligem Aufwand beziehungsweise Verbrauch an Energie für die Gemischbildung überflüssig gemacht und eingespart.

Die Anordnung beider Regelquerschnitte gemeinsam am Ort der Mischstelle kann gemäß einer bevorzugten Ausführung der erfindungsgemäßen Vorrichtung in der Weise erfolgen, daß ein vom Gemischauslaß in das Gehäuse hineinragender Rohrstutzen von einem an den Lufteinlaß angeschlossenen ringförmigen Gehäuseinnenraum umgeben ist, daß der Luftregelquerschnitt zwischen dem Rand dieses Rohrstutzens und dem Rand eines dem Rohrstutzen gegenüberliegend in den Gehäuseinnenraum hineinragenden, mit dem Gaseinlaß verbundenen Gehäuseinnenrohres gebildet ist und daß der Gasregelquerschnitt zwischen dem Rand dieses Gehäuseinnenrohres und dem Umfangsrand eines im Gehäuseinnenrohr längsverschiebbaren Regelschiebers gebildet ist. Vorteilhafte Weiterbildungen dieser Ausführungsform der erfindungsgemäßen Vorrichtung sind nachstehend anhand der Zeichnung näher beschrieben.

In der Zeichnung sind zwei Ausführungsbeispiele der erfindungsgemäßen Vorrichtung dargestellt, und zwar zeigt

Figur 1 ein erstes Ausführungsbeispiel im axialen Längsschnitt,

Figur 2 ein zweites Ausführungsbeispiel ebenfalls im axialen Längsschnitt.

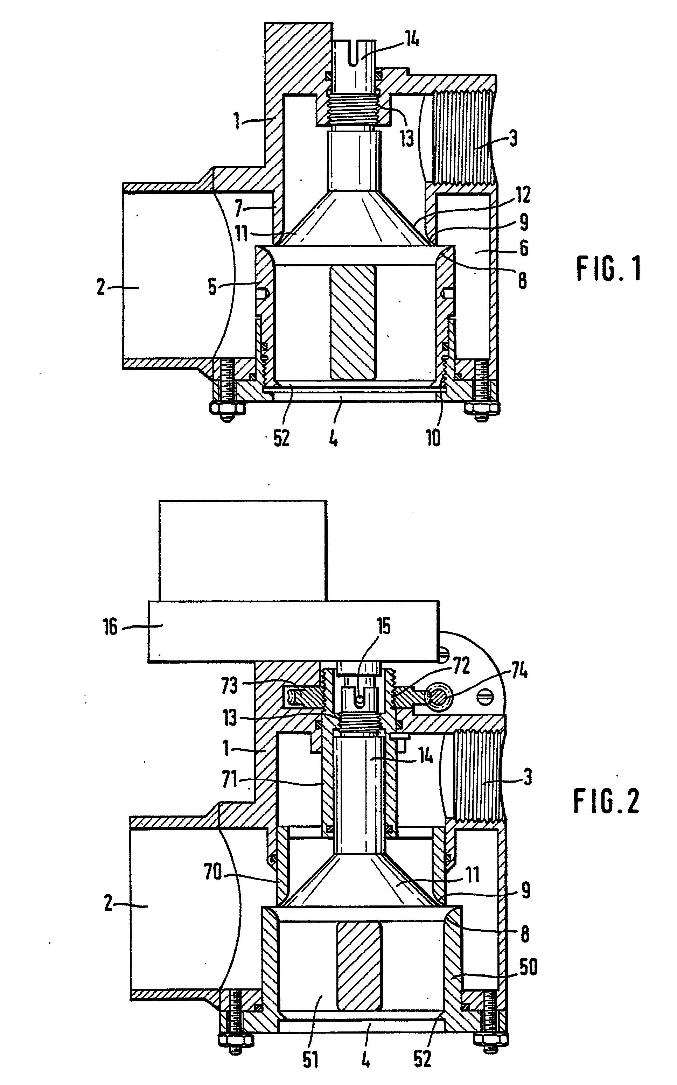

Bei dem Ausführungsbeispiel der Figur 1 besteht die Vorrichtung aus einem Gehäuse 1 mit einem Lufteinlaß 2, einem Gaseinlaß 3 und einem Gemischauslaß 4. In das Gehäuse ragt vom Gemischauslaß 4 ein Rohrstutzen 5 hinein, der von einem an den Lufteinlaß 2 angeschlossenen ringförmigen Gehäuseinnenraum 6 umgeben ist. Dem Rohrstutzen 5 gegenüberliegend ragt in den Gehäuseinnenraum 6 ein Gehäuseinnenrohr 7 hinein, das mit dem Gaseinlaß 3 verbunden ist und ein fester Wandungsteil des Gehäuses 1 ist. Der Rand 8 des Rohrstutzens 5 und der Rand 9 des Gehäuseinnenrohres 7 bilden zwischen sich den Luftregelquerschnitt, für dessen Veränderbarkeit der Rohrstutzen 5 in einem Gehäusestellgewinde 10 verdrehbar und dadurch axial im Gehäuse 1 verstellbar ist. In dem Gehäuseinnenrohr 7 ist ein Regelschieber 11 angeordnet, dessen Umfangsrand 12 mit dem Rand 9 des Gehäuseinnenrohres 7 den Gasregelquerschnitt bildet. Der Regelschieber 11 ist in einem Gehäusestellgewinde 13 verdrehbar und dadurch axial verstellbar.

Durch Verdrehen des Rohrstutzens 5 von Hand zum Beispiel vom Lufteinlaß 2 her und durch Verdrehen des Regelschiebers 11 von Hand an dem aus dem Gehäuse 1 herausragenden Schaft 14 werden die beiden Regelquerschnitte für Luft und Gas konstant so eingestellt, daß die zum Beispiel von einem Gasmotor angesaugte Luftmenge und Gasmenge in einem bestimmten Mischungsverhältnis die für eine bestimmte Motordrehzahl, zum Beispiel für die maximale Motordrehzahl erforderliche Gemischmenge ergeben. Eine reduzierende Regelung dieser Gemischmenge kann dann durch eine an den Gemischauslaß 4 sich anschließende Drosselklappe erfolgen. Eine Nachregelung des Mischungsverhältnisses zum Beispiel bei Änderung der Gasqualität kann an dem Schaft 14 des Regelschiebers 11 vorgenommen werden, beispielsweise auch durch einen an dem Schaft 14 angreifenden, nicht näher dargestellten motorischen Stellantrieb.

Beim Ausführungsbeispiel der Figur 2 ist der Rohrstutzen 50 fest mit dem Gehäuse 1 verbunden. Das Gehäuseinnenrohr 70 ist, um den Luftregelquerschnitt zwischen dem Gehäuseinnenrohr 70 und dem Rohrstutzen 50 zu verstellen, gemeinsam mit dem Regelschieber 11 im Gehäuse 1 axial verstellbar. Dazu ist das Gehäuseinnenrohr 70 mit einer Hülse 71 verbunden, die in dem Gehäuse 1 bei Sicherung gegen Verdrehen axial verschiebbar ist. Zur Verstellung des Gasregelquerschnitts zwischen dem Gehäuseinnenrohr 70 und dem Regelschieber 11 ist der Schaft 14 des Regelschiebers 11 in einem an der Hülse 71 angeordneten Stellgewinde 13 drehbar und dadurch axial gegenüber der Hülse 71 verstellbar.

Das Ausführungsbeispiel der Figur 2 eignet sich mit Vorteil, um anstatt mit einer an den Gemischauslaß 4 sich anschließenden Drosselklappe direkt durch Verstellen der beiden Regelquerschnitte für Luft und für Gas auch die Gemischmenge zu regeln. Hierzu ist beim Ausführungsbeispiel der Figur 2 die Hülse 71 mit einem Stellgewinde 72 ausgebildet, an dem eine am Gehäuse 1 axial fixierte und verdrehbar geführte Stellmutter 73 angreift, die von einem den Luftanteil des Gemisches verändernden Stellantrieb 74 betätigt wird. An dem Schaft 14 des Regelschiebers 11 greift über eine axial längenveränderliche Kupplung 15 ein den Gasanteil des Gemisches verändernder Stellantrieb 16 an. Durch Steuerung beider Stellantriebe 16 und 74 erfolgt eine Regelung der Gemischmenge, durch Steuerung eines der beiden Stellantriebe erfolgt eine Regelung des Mengenverhältnisses von Luft und Brenngas in der Gemischmenge.

Die in der Zeichnung dargestellte Bauart der erfindungsgemäßen Vorrichtung ist vorteilhafterweise so weiter ausgebildet, daß der Rand 8 des Rohrstutzens 5 beziehungsweise 50 als trichterartiger Einlauf abgeschrägt ausgebildet ist und daß der Rand 9 des Gehäuseinnenrohres 7 beziehungsweise 70 mit dem Regelschieber 11 einen in Gasströmungsrichtung kegelartig sich vergrößernden Gasdurchlaßquerschnitt bildet. Diese Formgebung der beiden Regelquerschnitte bewirkt, daß der im Gasregelquerschnitt sich aufweitende Gasstrom quer auf den im Luftregelquerschnitt trichterartig einlaufenden Luftstrom auftrifft und hierdurch, auch bei angestrebten laminaren Strömungsverhältnissen in beiden Regelquerschnitten, eine kräftige Durchmischung der beiden geregelten Ströme von Luft und Gas stattfindet. In besonders bevorzugter Weise sind der Rohrstutzenrand 8 und der Innenrohrrand 9 in der Gestalt von Quadratfunktions-Flächen ausgebildet und hat hierbei der Regelschieber die Gestalt eines 45°-Kegels. Mit dieser speziellen Formgebung sind konstante Druckverhältnisse im Luft- und im Gasregelquerschnitt erzielbar. Dadurch ist es möglich, beispielsweise bei einer Druckänderung in der Luftleitung, die den Luftdurchfluß durch den Luftregelquerschnitt verändert, eine Nachregelung des Gasregelquerschnitts proportional zur Luftdruckänderung vorzunehmen, um die Gasdurchflußmenge zur Konstanthaltung des Mischungsverhältnisses der veränderten Luftdurchflußmenge anzupassen. Zweckmäßigerweise hat der mit dem Gehäuseinnenrohr den Gasregelquerschnitt bildende Umfangsrand des Regelschiebers 11 einen Durchmesser, der kleiner ist als der Außendurchmesser des Innenrohrrandes. Hierdurch ragt der Umfangsrand des Regelschiebers bei dessen geöffneter Stellung nicht derart in die Luftströmung durch den Luftregelquerschnitt hinein, daß ein die Gasströmung im Gasregelquerschnitt störender Luftstau entsteht. Da an der Innenseite des Rohrstutzens 5 beziehungsweise 50 eine praktisch gasfreie Randströmung von Luft entstehen kann, ist der Rohrstutzen vorteilhafterweise zu seinem an den Gemischaustritt 4 angrenzenden Ende hin mit einer auf der Stutzeninnenseite vorspringenden, umlaufenden Strömungsabweiserkante 52 ausgebildet, um die Luft-Randströmung mit der übrigen Gemischströmung im Rohrstutzen zu durchwirbeln und zu vermischen. Bei Anwendung einer an den Gemischauslaß 4 angeschlossenen Drosselklappe ist der Rohrstutzen 5 beziehungsweise 50 zweckmäßigerweise mit Leitblechen 51 als Strömungsgleichrichter ausgebildet, um die durch die Drosselklappe bedingten unterschiedlichen Strömungs- und Druckverhältnisse vor einer Rückwirkung auf die Regelquerschnitte und gleichzeitige Gemischbildungsstelle auszugleichen.

## Patentansprüche

1. Vorrichtung zur Regelung der Menge und/oder des Mischungsverhältnisses eines Brenngas-Luft-Gemisches, bestehend aus einem Gehäuse mit einem Lufteinlaß, einem Gaseinlaß, einem Gemischauslaß, einem im Gehäuse mittels eines Regelschiebers veränderbaren Gasregelquerschnitt und einem verstellbaren Luftregelquerschnitt, dadurch gekennzeichnet, daß der Luftregelquerschnitt (8, 9) und der Gasregelquerschnitt (9, 11) derart in dem Gehäuse (1) angeordnet und ausgebildet sind, daß beide Regelquerschnitte mit ihren Austrittsseiten gemeinsam an den Rand (9) eines in den Gehäuseinnenraum hineinragenden Gehäuseinnenrohres (7) angrenzen und an diesem Rand diejenige Stelle des Gehäuseinnenraumes bilden, an der die Zusammenführung und Vermischung der mit den beiden Regelquerschnitten geregelten und aus ihnen austretenden Ströme von Luft und Gas stattfindet.

2. Vorrichtung nach Anspruch 1, dadurch gekennzeichnet, daß ein vom Gemischauslaß (4) in das Gehäuse (1) hineinragender Rohrstutzen (5) von einem an den Lufteinlaß (2) angeschlossenen ringförmigen Gehäuseinnenraum (6) umgeben ist, daß der Luftregelquerschnitt zwischen dem Rand (8) des Rohrstutzens (5) und dem Rand (9) des dem Rohrstutzen gegenüberliegend in den Gehäuseinnenraum hineinragenden, mit dem Gaseinlaß (3) verbundenen Gehäuseinnerohres (7) gebildet ist und daß der Gasregelquerschnitt zwischen dem Rand (9) des Gehäuseinnenrohres (7) und dem Umfangsrand eines im Gehäuseinnenrohr längsverschiebbaren Regelschiebers (11) gebildet ist.

3. Vorrichtung nach Anspruch 2, dadurch gekennzeichnet, daß der Rand (8) des Rohrstutzens (5) als trichterartiger Einlauf abgeschrägt ausgebildet ist und daß der Rand (9) des Gehäuseinnenrohres (7) mit dem Regelschieber (11) einen in Gasströmungsrichtung kegelartig sich vergrößernden Gasdurchlaßquerschnitt bildet.

4. Vorrichtung nach Anspruch 3, dadurch gekennzeichnet, daß der Rand des Gehäuseinnenrohres (7) und des Rohrstutzens (5) in der Gestalt von Quadratfunktions-Flächen abgerundet sind und der Regelschieber (11) die Gestalt eines 45°-Kegels hat.

5. Vorrichtung nach Anspruch 3 oder 4, dadurch gekennzeichnet, daß der mit dem Rand (9) des Gehäuseinnenrohres (7) zusammenwirkende Umfangsrand des Regelschiebers (11) einen Durchmesser aufweist, der kleiner als der Außendurchmesser des Randes (9) des Gehäuseinnenrohres (7) ist.

6. Vorrichtung nach einem der Ansprüche 2 bis 5, dadurch gekennzeichnet, daß das Gehäuseinnenrohr (7) ein Wandungsteil des Gehäuses (1) ist und der Rohrstutzen (5) in dem Gehäuse axial verstellbar ist.

7. Vorrichtung nach einem der Ansprüche 2 bis 5, dadurch gekennzeichnet, daß der Rohrstutzen (50) fest mit dem Gehäuse (1) verbunden ist und das Gehäuseinnenrohr (70) gemeinsam mit dem Regelschieber (11) im Gehäuse axial verstellbar ist.

8. Vorrichtung nach Anspruch 7, dadurch gekennzeichnet, daß das Gehäuseinnenrohr (70) im Gehäuse (1) gegen Verdrehen gesichert ist und mittels einer am Gehäuse drehbar geführten Stellmutter (73) im Gehäuse längsverschiebbar ist und daß der Regelschieber (11) mittels eines Stellgewindes (13) im Gehäuseinnenrohr verdrehbar und längsverschiebbar ist, wobei vorzugsweise an der Stellmutter und am Regelschieber je ein Stellantrieb (74 beziehungsweise 16) angreift.

## Claims

1. A device for controlling the flow rate and/or the mixing ratio of a gaseous fuel-air mixture, comprising a body provided with an air inlet, a gas inlet, a mixture outlet, a gas-control passage variable by a control slide and an adjustable air-control passage characterized in that said air-control passage (8, 9) and said gas-control passage (9, 11) are arranged and designed in said body (1) in such a way that the outlet ends of both control passages together adjoin the edge (9) of an inner tube (7) protruding into the inner body space forming at said edge the location of the inner body space where the air and gas flows controlled in said control passages and exiting therefrom are combined and mixed.

2. A device according to claim 1 characterized in that a pipe stub (5) protruding from the mixture outlet (4) into said body (1) is surrounded by an annular inner body space (6) connected with said air inlet (2), said air-control passage is formed between the edge (8) of said pipe stub (5) and the edge (9) of said inner tube (7) arranged opposite said pipe stub and protruding into said inner body space, said inner tube being connected with said gas inlet (3), and said gas-control passage is formed between said edge (9) of said inner tube (7) and the circumferential edge of a control slide (11) movable inside said inner tube in the longitudinal direction.

3. A device according to claim 2 characterized in that said edge (8) of said pipe stub (5) forms an oblique funnelshaped inlet and said edge (9) of said inner tube (7) and said control slide (11) form a gas passage widening in the direction of gas flow in the form of a cone.

4. A device according to claim 3 characterized in that said edge of said inner tube (7) and said edge of pipe stub (5) are rounded in such a way that the contours of said edges have the shapes of the curves of square functions, and in that the shape of said control slide (11) is that of a 45° cone.

5. A device according to claim 3 or 4 characterized in that the circumferential edge of said control slide (11) interacting with said edge (9) of said inner tube (7) is of a diameter which is smaller than the outside diameter of said edge (9) of said inner tube (7).

6. A device according to any one of claims 2 through 5 characterized in that said inner tube (7) is part of the wall of said body (1) and said pipe stub (5) is movable inside said body in the axial direction.

7. A device according to any one of claims 2 through 5 characterized in that said pipe stub (50) is firmly connected with said body (1) and said inner tube (70) is movable inside said body together with said control slide (11) in the axial direction.

8. A device according to claim 7 characterized in that said inner tube (70) is secured inside said body (1) to prevent rotation and is movable inside said body in the longitudinal direction by means of a rotatable adjusting nut (73) provided on said body and in that said control slide (11) is rotatable and movable in the longitudinal direction inside said inner tube by means of an adjusting thread (13), an actuator (74 and 16 respectively) being preferably provided for the adjustment of said nut and said control slide.

## Revendications

1. Dispositif de controle du débit et/ou du rapport de mélange d'un mélange combustible gazeux-air, comprenant un carter avec une entrée d'air, une entrée de gaz, une sortie de mélange, une section de réglage du gaz dans le carter variable par moyen d'un tiroir de réglage et une section ajustable de réglage d'air, caractérisé par le fait que la section de réglage d'air (8, 9) et la section de réglage de gaz (9, 11) sont conçues et disposées dans le carter (1) de manière que les deux sections de réglage avoisinent en commun avec leurs côtés de sortie le bord (9) d'un tube intérieur (7) faisant saillie dans la partie intérieure du carter et forment au niveau dudit bord l'endroit de la partie intérieure du carter où les flux d'air et du gaz, réglés à l'aide des deux sections de réglage d'où ils sortent, se réunissent et se mélangent.

2. Dispositif selon la revendication 1, caractérisé par le fait qu'une tubulure (5) faisant saillie de la sortie de mélange (4) dans le carter (1) est entourée d'une espace annulaire (6) contigue à l'entrée d'air (2), que la section de réglage d'air est formée entre le bord (8) de la tubulure (5) et le bord (9) du tube intérieure (7), opposé à la tubulure, faisant saillie dans la partie intérieure du carter et raccordé à l'entrée de gaz (3), et que la section de réglage de gaz est formée entre le bord (9) du tube intérieure (7) et le périmètre d'un tiroir de réglage (11) pouvant être déplacé longitudinalement dans le tube intérieure.

3. Dispositif selon la revendication 2, caractérisé par le fait que le bord (8) de la tubulure (5) et conçu en entonnoir comme entrée inclinée et que le bord (9) du tube intérieur (7) forme avec le tiroir de réglage (11) une section d'entrée de gaz s'aggrandissant en cône en direction de l'écoulement du gaz.

4. Dispositif selon la revendication 3, caractérisé par le fait que le bord du tube intérieur (7) et de la tubulure (5) sont arrondis sous forme de courbe d'équation de second degré et que le tiroir de réglage (11) a la forme d'un cône de 45°.

5. Dispositif selon l'une des revendications 3 ou 4, caractérisé par le fait que le périmètre du tiroir de réglage (11) fonctionnant en relation avec le bord (9) du tube intérieur (7) présente un diamètre inférieur au diamètre extérieur du bord (9) du tube intérieur (7).

6. Dispositif selon l'une quelconque des revendications 2 à 5, caractérisé par le fait que le tube intérieur (7) est une partie de la paroi du carter (1) et que la tubulure (5) peut être déplacée axialement dans le carter.

7. Dispositif selon l'une quelconque des revendications 2 à 5, caractérisé par le fait que la tubulure (50) est connectée fermement au carter (1) et que le tube intérieur (70) peut être déplacé axialement dans le carter en commun avec le tiroir de réglage (11).

8. Dispositif selon la revendication 7, caractérisé par le fait que le tube (70) dans le carter (1) est arrêté ne permettant pas un mouvement de rotation et qu'il peut être déplacé longitudinalement dans le carter à l'aide d'un écrou de réglage (73), et que le tiroir de réglage (11) peut être tourné et déplacé longitudinalement dans le tube à l'aide d'un filet de réglage (13), l'écrou de réglage et le tiroir de réglage étant de préférence actionnés par un opérateur (74 resp. 16).

FIG. 1

FIG. 2